(19) Europäisches Patentamt

European Patent Office

Office européen des brevets

(11) **EP 4 398 471 A1**

(12) **EUROPEAN PATENT APPLICATION**

(43) Date of publication:
**10.07.2024 Bulletin 2024/28**

(21) Application number: **23217247.8**

(22) Date of filing: **15.12.2023**

(51) International Patent Classification (IPC):
*H02M 3/158* (2006.01)    *H02M 5/458* (2006.01)
*H02M 1/00* (2006.01)    *H02M 3/156* (2006.01)

(52) Cooperative Patent Classification (CPC):
**H02M 3/158; H02M 5/458;** H02J 9/062;
H02M 1/0032; H02M 3/156

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.01.2023 US 202363478769 P
01.12.2023 US 202318526184**

(71) Applicant: **Schneider Electric IT Corporation
Foxboro, MA 02035 (US)**

(72) Inventors:
• **Chan, Pin-Chieh
ANDOVER, 01810 (US)**
• **Chen, Chia-Kun
ANDOVER, 01810 (US)**

(74) Representative: **Plasseraud IP
66, rue de la Chaussée d'Antin
75440 Paris Cedex 09 (FR)**

(54) **POWER SYSTEM AND METHOD OF OPERATING A POWER SYSTEM**

(57) Examples of the disclosure include a power system configured to be coupled to at least one energy-storage device, the power system comprising a first switch, a second switch, and at least one controller configured to detect a discontinuous conduction mode (DCM) based on at least one of an output voltage of the energy-storage device or an output power of the energy-storage device, and control the first switch to be open in one of a buck mode or a boost mode based on detecting the DCM.

FIG. 2

**EP 4 398 471 A1**

## Description

BACKGROUND

### Field of the Disclosure

At least one example in accordance with the present disclosure relates generally to power devices.

### Discussion of Related Art

Power devices, such as uninterruptible power supplies (UPSs), may be used to provide regulated, uninterrupted power for sensitive and/or critical loads, such as computer systems and other data-processing systems. Examples of UPSs include online UPSs, offline UPSs, line-interactive UPSs, as well as others. UPSs may provide output power to a load. The output power may be derived from a primary source of power, such as a utility-mains source, and/or derived from a back-up source of power, such as an energy-storage device.

BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:

FIG. 1 illustrates a block diagram of an uninterruptible power supply according to an example;
FIG. 2 illustrates a schematic diagram of a buck-boost converter according to an example;
FIG. 3A illustrates a schematic diagram of the buck-boost converter in a first stage of the buck mode according to an example;
FIG. 3B illustrates a schematic diagram of the buck-boost converter in a second stage of the buck mode according to an example;
FIG. 4A illustrates a schematic diagram of the buck-boost converter in a first stage of the boost mode according to an example;
FIG. 4B illustrates a schematic diagram of the buck-boost converter in a second stage of the boost mode according to an example;
FIG. 5 illustrates a graph of battery voltage against battery power according to an example; and

FIG. 6 illustrates a process of controlling the buck-boost converter according to an example.

DETAILED DESCRIPTION

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms. In addition, in the event of inconsistent usages of terms between this document and documents incorporated herein by reference, the term usage in the incorporated features is supplementary to that of this document; for irreconcilable differences, the term usage in this document controls.

As discussed above, power devices such as uninterruptible power supplies (UPSs) may be used to provide power to one or more loads. Power devices may include any of several types of power converters, such as DC/DC converters. DC/DC converters may be implemented according to any of various topologies. One example of a DC/DC converter topology is a buck-boost converter. A buck-boost converter is configured to buck (that is, decrease) or boost (that is, increase) a voltage level of power. For example, a DC bus in a UPS may be coupled to a battery via a buck-boost converter. The buck-boost converter may be used to buck power being provided from the DC bus to the battery when recharging the battery, and may be used to boost power being drawn from the battery to the DC bus when discharging the battery.

As discussed in greater detail below, a buck-boost converter may include several switches coupled to an inductor. Using the buck mode as an example, a first switch may be operated to switch at a high frequency to provide power to the inductor. While the first switch is closed to provide power to the inductor, magnetic energy may accumulate in the inductor. When the first switch is opened, the inductor discharges the stored magnetic energy. The discharge current may be discharged through a second switch. If the second switch is closed, the discharge current may be discharged through the closed second switch. Even if the second switch is open, however, the discharge current may still be conducted through the body diode of the second switch.

It may be less efficient for the discharge current to be conducted through the body diode. It may therefore be advantageous for the second switch to be closed while the inductor is discharging. However, it may also be advantageous for the second switch to be opened once the inductor stops discharging. If the second switch is left closed once the inductor is completely discharged, the battery may undesirably discharge back to the UPS.

The inductor may become completely discharged in discontinuous conduction mode (DCM), as contrasted from continuous conduction mode (CCM). In DCM, the inductor is not continuously conducting because the inductor is able to fully discharge before another cycle begins in which the inductor is recharged. In CCM, the inductor continuously conducts because the inductor does not fully discharge before another cycle begins in which the inductor is recharged. Because the inductor is only fully discharged in DCM, the battery discharging back to the UPS is a condition that is present in DCM, but may not be present CCM.

It may therefore be advantageous to close the second switch while the inductor is conducting, but to open the second switch while the inductor is discharged in DCM. However, it may be costly or otherwise difficult to precisely measure the current through the inductor. It may therefore be challenging to open and close the second switch precisely in synchronization with the inductor current. Although these examples are provided with respect to the buck mode, similar principles apply to the boost mode.

Examples of the disclosure provide a simple and efficient manner of determining when a power converter is in DCM or CCM. In various examples, an output voltage and an output power of the battery may be determined. At a given output voltage, the power converter may be in CCM if the output power is above a threshold power value, and may be in DCM if the output power is below the threshold power value. Accordingly, based on the output voltage and the output power, examples of the disclosure may determine whether the converter is in DCM or CCM. In various examples, if the converter is in DCM, a switch through which the inductor discharges may be opened. Power discharged by the inductor may be discharged through the body diode of the open switch.

If the converter is in CCM, the switch through which the inductor discharges may be closed. Power discharged by the inductor-which may never fully discharge in CCM, thus obviating a possibility of power being discharged in an undesired manner through the system when the inductor is discharged-may be discharged through the closed switch. Accordingly, examples of the disclosure provide a simple and efficient manner of detecting when the power converter is in DCM or CCM and controlling one or more switches based on the determination.

As discussed above, power converters may be implemented in devices such as UPSs. An example of a UPS is provided below for purposes of explanation. However, the principles of the disclosure are not limited to UPSs. Examples of the disclosure may be implemented in any of various power converters (for example, buck-boost converters, buck converters, boost converters, and so forth) which may be implemented in any of various power devices including, but not limited to, UPSs.

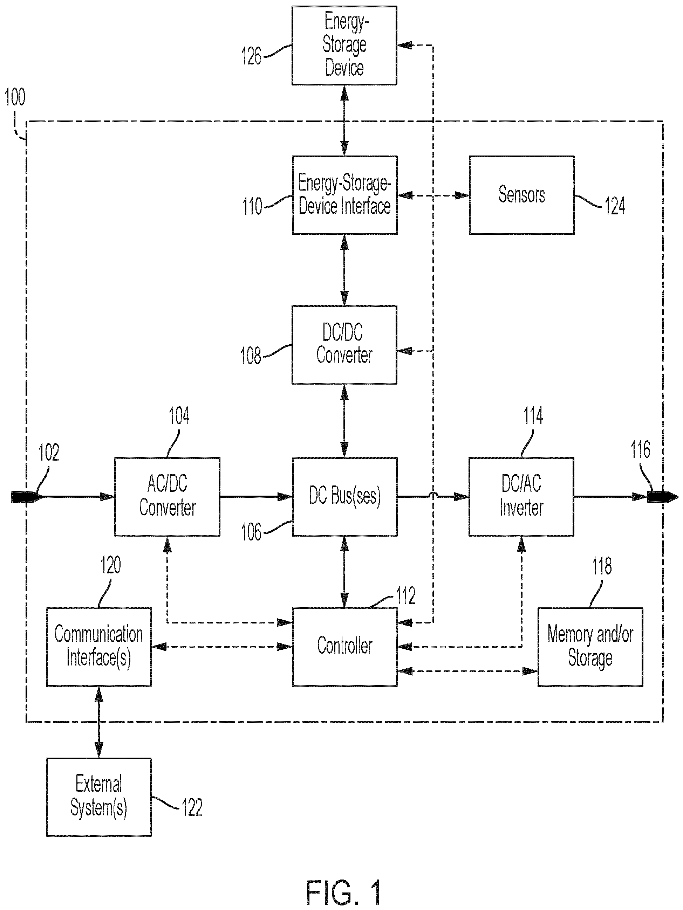

FIG. 1 is a block diagram of a UPS 100 according to an example. The UPS 100 includes an input 102, an AC/DC converter 104, one or more DC busses 106, a DC/DC converter 108, an energy-storage-device interface 110, at least one controller 112 ("controller 112"), a DC/AC inverter 114, an output 116, a memory and/or storage 118, one or more communication interfaces 120 ("communication interfaces 120"), which may be communicatively coupled to one or more external systems 122 ("external systems 122"), and one or more voltage sensors and/or current sensors 124 ("sensors 124").

The input 102 is coupled to the AC/DC converter 104 and to an AC power source (not pictured), such as an AC mains power supply. The AC/DC converter 104 is coupled to the input 102 and to the one or more DC busses 106, and is communicatively coupled to the controller 112. The one or more DC busses 106 are coupled to the AC/DC converter 104, the DC/DC converter 108, and to the DC/AC inverter 114, and are communicatively coupled to the controller 112. The DC/DC converter 108 is coupled to the one or more DC busses 106 and to the energy-storage-device interface 110, and is communicatively coupled to the controller 112. The energy-storage-device interface 110 is coupled to the DC/DC converter 108, and is configured to be coupled to at least one energy-storage device 126 and/or another energy-storage device. In some examples, the energy-storage-device interface 110 is configured to be communicatively coupled to the controller 112.

In some examples, the UPS 100 may be external to the at least one energy-storage device 126 and may be coupled to the at least one energy-storage device 126 via the energy-storage-device interface 110. In various examples, the UPS 100 may include one or more energy-storage devices, which may include the energy-storage device 126. The energy-storage device 126 may include one or more batteries, capacitors, flywheels, or other energy-storage devices in various examples.

The DC/AC inverter 114 is coupled to the one or more DC busses 106 and to the output 116, and is communicatively coupled to the controller 112. The output 116 is coupled to the DC/AC inverter 114, and to an external load (not pictured). The controller 112 is communicatively coupled to the AC/DC converter 104, the one or more DC busses 106, the DC/DC converter 108, the energy-storage-device interface 110, the DC/AC inverter 114, the memory and/or storage 118, the communication interfaces 120, and/or the energy-storage device 126. The sensors 124 are communicatively coupled to the controller 112 and may be coupled to one or more other components of the UPS 100, such as the input 102, the AC/DC converter 104, the one or more DC busses 106, the DC/DC converter 108, the energy-storage-device interface 110, the DC/AC inverter 114, and/or the output 116.

The input 102 is configured to be coupled to an AC mains power source and to receive input AC power having an input voltage level. The UPS 100 is configured to operate in different modes of operation based on the input voltage of the AC power provided to the input 102. The controller 112 may determine a mode of operation in which to operate the UPS 100 based on whether the input voltage of the AC power is acceptable. The controller 112 may include or be coupled to one or more sensors, such as the sensors 124, configured to sense parameters of the input voltage. For example, the sensors 124 may include one or more voltage and/or current sensors coupled to the input 102 and being configured to sense information indicative of a voltage at the input 102 and provide the sensed information to the controller 112.

When AC power provided to the input 102 is acceptable (for example, by having parameters, such as an input voltage value, that meet specified values, such as by falling within a range of acceptable input voltage values), the controller 112 controls components of the UPS 100 to operate in a normal mode of operation. In the normal mode of operation, AC power received at the input 102 is provided to the AC/DC converter 104. The AC/DC converter 104 converts the AC power into DC power and provides the DC power to the one or more DC busses 106. The one or more DC busses 106 distribute the DC power to the DC/DC converter 108 and to the DC/AC inverter 114. The DC/DC converter 108 converts the received DC power and provides the converted DC power to the energy-storage-device interface 110. The energy-storage-device interface 110 receives the converted DC power, and provides the converted DC power to the energy-storage device 126 to charge the energy-storage device 126. The DC/AC inverter 114 receives DC power from the one or more DC busses 106, converts the DC power into regulated AC power, and provides the regulated AC power to the output 116 to be delivered to a load.

When AC power provided to the input 102 from the AC mains power source is not acceptable (for example, by having parameters, such as an input voltage value, that do not meet specified values, such as by falling outside of a range of acceptable input voltage values), the controller 112 controls components of the UPS 100 to operate in a backup mode of operation. In the backup mode of operation, DC power is discharged from the energy-storage device 126 to the energy-storage-device interface 110, and the energy-storage-device interface 110 provides the discharged DC power to the DC/DC converter 108. The DC/DC converter 108 converts the received DC power and distributes the DC power amongst the one or more DC busses 106. For example, the DC/DC converter 108 may evenly distribute the power amongst the one or more DC busses 106. The one or more DC busses 106 provide the received power to the DC/AC inverter 114. The DC/AC inverter 114 receives the DC power from the one or more DC busses 106, converts the DC power into regulated AC power, and provides the regulated AC power to the output 116.

In some examples, the sensors 124 may include one or more sensors coupled to one or more of the foregoing components such that a voltage and/or current of one or more of the foregoing components may be determined by the controller 112. The controller 112 may store information in, and/or retrieve information from, the memory and/or storage 118. For example, the controller 112 may store information indicative of sensed parameters (for example, input-voltage values of the AC power received at the input 102) in the memory and/or storage 118. The controller 112 may further receive information from, or provide information to, the communication interfaces 120. The communication interfaces 120 may include one or more communication interfaces including, for example, user interfaces (such as display screens, touch-sensitive screens, keyboards, mice, track pads, dials, buttons, switches, sliders, light-emitting components such as light-emitting diodes, sound-emitting components such as speakers, buzzers, and so forth configured to output sound inside and/or outside of a frequency range audible to humans, and so forth), wired communication interfaces (such as wired ports), wireless communication interfaces (such as antennas), and so forth, configured to exchange information with one or more systems, such as the external systems 122, or other entities, such as human beings. The external systems 122 may include any device, component, module, and so forth, that is external to the UPS 100, such as a server, database, laptop computer, desktop computer, tablet computer, smartphone, central controller or data-aggregation system, other UPSs, and so forth.

As discussed above, the DC/DC converter 108 may provide power from the DC busses 106 to the energy-storage device 126, and may provide power from the energy-storage device 126 to the DC busses 106. The DC/DC converter 108 may be implemented according to any of various topologies including, for example, buck converters, boost converters, buck-boost converters, and so forth. For example, where the DC/DC converter 108 is implemented as a buck-boost converter, the DC/DC converter 108 may buck power received from the DC busses 106 to provide to the energy-storage device 126. The DC/DC converter 108 may boost power received from the energy-storage device 126 to provide to the DC busses 106.

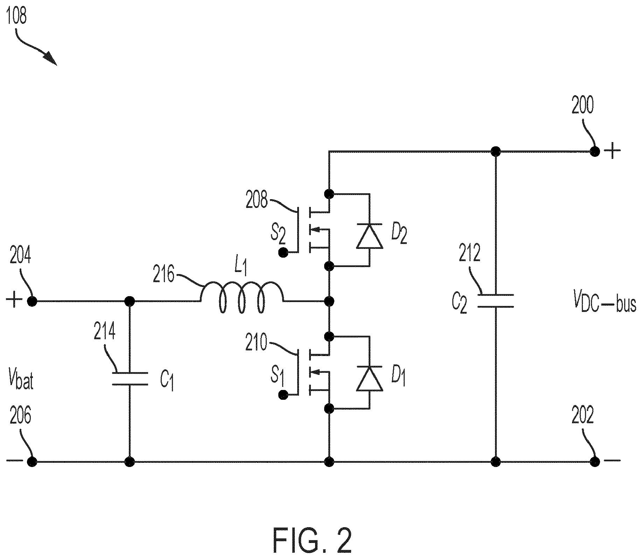

FIG. 2 illustrates a schematic diagram of the DC/DC converter 108 according to an example. In the illustrated example, the DC/DC converter 108 may be implemented as a buck-boost converter. The DC/DC converter 108 includes a positive bus connection 200, a negative bus connection 202, a positive battery connection 204, a negative battery connection 206, a first switching device 208, a second switching device 210, a bus capacitor 212, a battery capacitor 214, and an inductor 216.

The positive bus connection 200 is coupled to the first switching device 208 and to the bus capacitor 212. The positive bus connection 200 may be coupled to one or more DC busses, such as the DC busses 106. The negative bus connection 202 is coupled to the negative battery connection 206, the second switching device 210, the bus capacitor 212, and the battery capacitor 214. The negative bus connection 202 may be coupled to one or more DC busses, such as the DC busses 106. The positive battery connection 204 is coupled to the battery capacitor 214 and the inductor 216. The positive battery connection 204 may be coupled to a positive terminal of an energy-storage device (for example, a battery), such as the energy-storage device 126. The negative battery connection 206 is coupled to the negative bus connection 202, the second switching device 210, the bus capacitor 212, and the battery capacitor 214. The negative battery connection 206 may be coupled to a negative terminal of an energy-storage device (for example, a battery), such as the energy-storage device 126.

The first switching device 208 is coupled to the positive bus connection 200 and the bus capacitor 212 at a first connection, is coupled to the second switching device 210 and the inductor 216 at a second connection, and is configured to be communicatively coupled to the controller 112. The first switching device 208 includes a parallel-connected body diode having an anode coupled to the second connection of the first switching device 208 and a cathode coupled to the first connection of the first switching device 208. The second switching device 210 is coupled to the first switching device 208 and the inductor 216 at a first connection, is coupled to the negative bus connection 202, the negative battery connection 206, the bus capacitor 212, and the battery capacitor 214 at a second connection, and is configured to be communicatively coupled to the controller 112. The second switching device 210 includes a parallel-connected body diode having an anode coupled to the second connection of the second switching device 210, and a cathode coupled to the first connection of the second switching device 210.

The bus capacitor 212 is coupled to the positive bus connection 200 and the first switching device 208 at a first connection, and is coupled to the negative bus connection 202, the negative battery connection 206, the second switching device 210, and the battery capacitor 214 at a second connection. The battery capacitor 214 is coupled to the positive battery connection 204 and the inductor 216 at a first connection, and is coupled to the negative bus connection 202, the negative battery connection 206, and the second switching device 210 at a second connection. The inductor 216 is coupled to the positive battery connection 204 and the battery capacitor 214 at a first connection, and is coupled to the first switching device 208 and the second switching device 210 at a second connection.

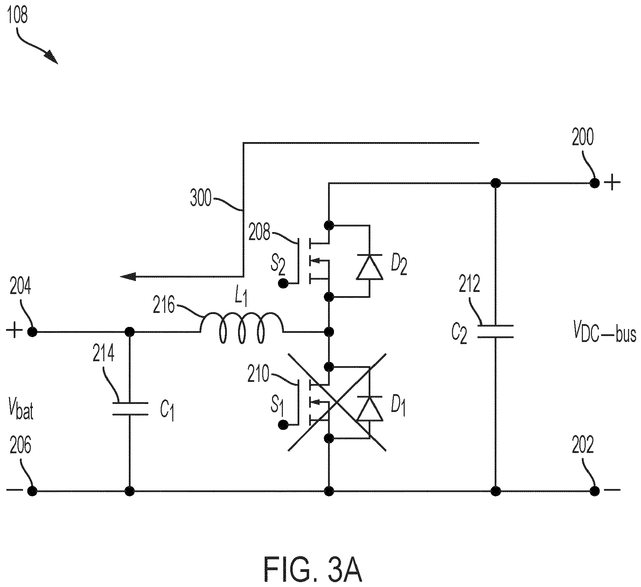

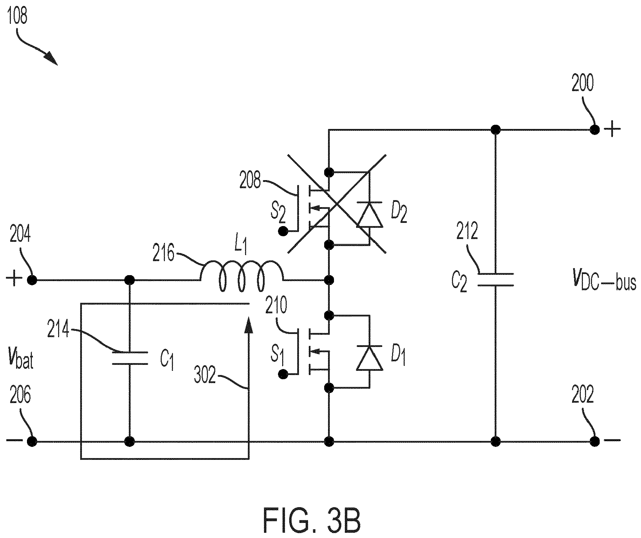

In examples in which the DC/DC converter 108 is implemented as a buck-boost converter, the controller 112 is configured to operate the DC/DC converter 108 in a buck mode or a boost mode. In the buck mode, the DC/DC converter 108 draws power from the DC busses 106 via the battery connections 200, 202, decreases a voltage level of the drawn power, and provides bucked power to the energy-storage device 126 (for example, to recharge the energy-storage device 126) via the battery connections 204, 206. In some examples of the buck mode, the controller 112 operates the first switching device 208 to open and close at a high frequency to alternately charge and discharge the inductor 216. An example of the buck mode is provided with respect to FIGS. 3A and 3B.

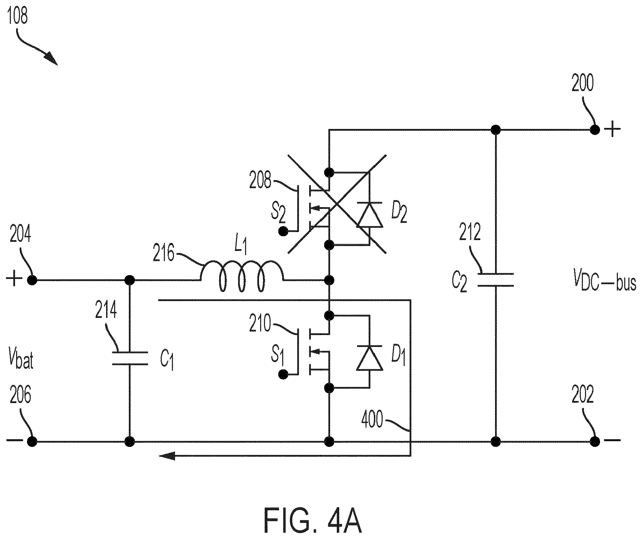

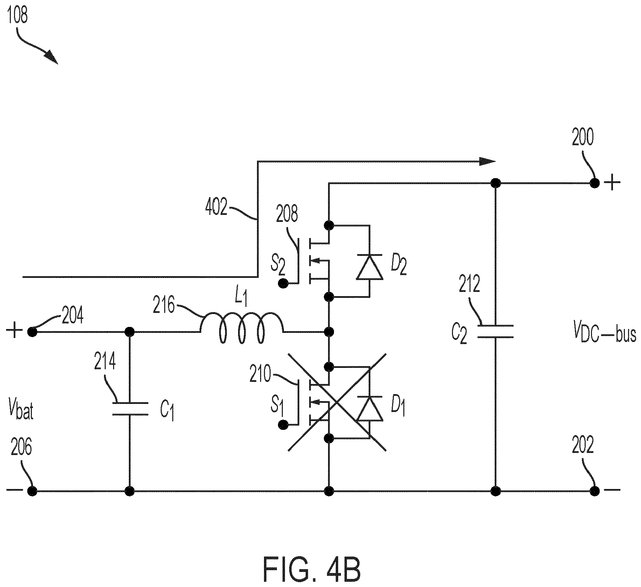

In the boost mode, the DC/DC converter 108 draws power from the energy-storage device 126 via the battery connections 204, 206, increases a voltage level of the drawn power, and provides boosted power to the DC busses 106 via the bus connections 200, 202. In some examples of the boost mode, the controller 112 operates the second switching device 210 to open and close at a high frequency to alternately charge and discharge the inductor 216. An example of the boost mode is provided with respect to FIGS. 4A and 4B.

FIG. 3A illustrates a schematic diagram of the DC/DC converter 108 in the buck mode while the first switching device 208 is closed. As discussed above, in the buck mode, the controller 112 operates the first switching device 208 at a high frequency to alternately open and close. Accordingly, the first switching device 208 may be referred to as a "high-frequency switch" in the buck mode. The second switching device 210 may be referred to as a "synchronous switch" in the buck mode.

While the controller 112 controls the first switching device 208 to be closed, the controller 112 may control the second switching device 210 to be open. As indicated by a current trace 300, current may be drawn from the DC busses 106 via the bus connections 200, 202 and provided through the first switching device 208 to the inductor 216. Stored energy accumulates in the inductor 216 while current is provided to the inductor 216. The amount of energy stored in the inductor 216-and how much output power is provided to the battery connections 204, 206-depends at least in part on the magnitude and duration of the current being provided to the inductor 216.

The duration that current is provided to the inductor 216 depends, in turn, on how long the first switching device 208 is closed. Accordingly, the first switching device 208 may be closed for a longer duration when higher output power is desired.

FIG. 3B illustrates a schematic diagram of the DC/DC converter 108 in the buck mode while the first switching device 208 is open and the inductor 216 is discharging. When the first switching device 208 is opened, the inductor 216 may discharge stored energy in a loop indicated by a current trace 302 including the battery capacitor 214 and the second switching device 210. The second switching device 210 may be open or closed while the inductor 216 is discharging. If the second switching device 210 is closed, current passes through the second switching device 210 with relatively low resistance. If the second switching device 210 is open, current still passes through the parallel-connected diode of the second switching device 210 with relatively higher resistance.

While the first switching device 208 is open, it may be advantageous to close the second switching device 210 when the inductor 216 is discharging, and to open the second switching device 210 when the inductor 216 has completed discharging. If the second switching device 210 remains closed when the inductor 216 finishes discharging, power may undesirably be drawn from the positive battery connection 204 to the negative battery connection 206 via the closed second switching device 210. Because the inductor 216 never fully discharges in CCM, this may only be a factor to consider in DCM. However, it may be challenging to measure the current through the inductor 216 at a high enough frequency to detect when the inductor 216 has fully discharged in DCM. That is, while it may be advantageous to open the second switching device 210 as soon as the inductor 216 finishes discharging, in practice it may be difficult to measure precisely when the inductor 216 finishes discharging.

Whether the DC/DC converter 108 is in DCM or CCM depends at least in part on how long the first switching device 208 is closed, because the amount of energy stored in the inductor 216 depends at least in part on how long the first switching device 208 provides current to the inductor 216. As discussed above, how long the first switching device 208 is closed depends at least in part on a desired output power. How long the first switching device 208 is closed may therefore be correlated to how much output power is provided. Accordingly, for output power above a certain threshold power level corresponding to a level at which the inductor 216 does not fully discharge before the first switching device 208 is again opened, the DC/DC converter 108 may operate in CCM. For output power below the threshold power level, the DC/DC converter 108 may operate in DCM.

In various examples of the buck mode, therefore, when the first switching device 208 is open the second switching device 210 may be closed in CCM and may be open in DCM. Whether the DC/DC converter 108 is in CCM or DCM may be determined based on whether the output power is above a threshold power value, responsive to which the DC/DC converter 108 may be determined to be in CCM. As discussed below, the threshold power value may be determined at least in part on a voltage across the battery connections 204, 206, which may be indicative of a voltage of the energy-storage device 126.

FIG. 4A illustrates a schematic diagram of the DC/DC converter 108 in the boost mode while the second switching device 210 is closed. As discussed above, in the boost mode, the controller 112 operates the second switching device 210 at a high frequency (for example, the same switching frequency that the first switching device 208 is operated at during the buck mode) to alternately open and close. Accordingly, the second switching device 210 may be referred to as a "high-frequency switch" in the boost mode, whereas the first switching device 208 was referred to as the high-frequency switch in the buck mode. Similarly, the first switching device 208 may be referred to as a "synchronous switch" in the boost mode, whereas the second switching device 210 was referred to as the synchronous switch in the boost mode.

While the second switching device 210 is closed, the controller 112 may control the first switching device 208 to be open. As indicated by the current trace 400, current may be drawn from the energy-storage device 126 via the battery connections 204, 206 and provided through the second switching device 210 and the inductor 216. Stored energy accumulates in the inductor 216 while current is provided to the inductor 216. The amount of energy stored in the inductor 216-and how much output power is provided to the bus connections 200, 202-depends at least in part on the magnitude and duration of the current being provided to the inductor 216. The duration that current is provided to the inductor 216 depends, in turn, on how long the second switching device 210 is closed. Accordingly, the second switching device 210 may be closed for a longer duration when higher output power is desired.

FIG. 4B illustrates a schematic diagram of the DC/DC converter 108 in the boost mode while the second switching device 210 is open and the inductor 216 is discharging. When the second switching device 210 is opened, the inductor 216 may discharge stored energy through the first switching device 208 as indicated by the current trace 402. The first switching device 208 may be open or closed while the inductor 216 is discharging. If the first switching device 208 is closed, current passes through the first switching device 208 with relatively low resistance. If the first switching device 208 is open, current still passes through the parallel-connected diode of the first switching device 208 with relatively higher resistance.

While the second switching device 210 is open, it may be advantageous to close the first switching device 208 when the inductor 216 is discharging, and to open the first switching device 208 when the inductor 216 has completed discharging. If the first switching device 208 remains closed when the inductor 216 finishes discharging, power may undesirably be drawn from the positive bus connection 200 to the negative bus connection 202 via the closed first switching device 208. Because the inductor 216 never fully discharges in CCM, this may only be a factor to consider in DCM. Accordingly, in the boost mode, the first switching device 208 may be closed when the DC/DC converter 108 is in CCM, and may be open when the DC/DC converter 108 is in DCM.

As discussed above and as explained in greater detail below, a boundary between CCM and DCM may depend at least in part on a power and voltage of the energy-storage device 126. Based on the volt-second balance principle, a boundary inductance current $I_{LB}$ may be expressed by Equation (1),

$$I_{LB} = \frac{P_o}{V_{bat}}$$

a peak inductance current $I_{Lpeak}$ may be expressed by Equation (2),

$$I_{Lpeak} = \frac{V_{bat} * T_s * D}{L}$$

and a relationship between the boundary inductance current and the peak inductance current may be expressed by Equation (3),

$$\frac{I_{LB}}{I_{Lpeak}} = \frac{P_o * L}{V_{bat} * V_{bat} * D * T_s}$$

where Po is an output power provided to or received from the energy-storage device 126, L is an inductance of the inductor 216, Vbat is a voltage of the energy-storage device 126, D is a duty cycle of a high-frequency switch (that is, the first switching device 208 in the buck mode and the second switching device 210 in the boost mode), and Ts is a pulse-width modulation (PWM) switch frequency of the high-frequency switch. The duty cycle D may be expressed by Equation (4),

$$D = 1 - \frac{V_{bat}}{V_o}$$

where Vo is a voltage across the bus connections 200, 202. Substituting Equation (4) into Equation (3) yields Equation (5),

$$\frac{I_{LB}}{I_{Lpeak}} = \frac{P_o * L}{V_{bat} * V_{bat} * (1 - \frac{V_{bat}}{V_o}) * T_s}$$

A boundary between CCM and DCM occurs when Equation (5) is equal to ½, that is, when the peak inductance current is twice the boundary inductance current. Because the inductance L, the PWM switch frequency Ts, and output voltage Vo have known values, the only variables in Equation (5) are the battery voltage Vbat and the output power Po.

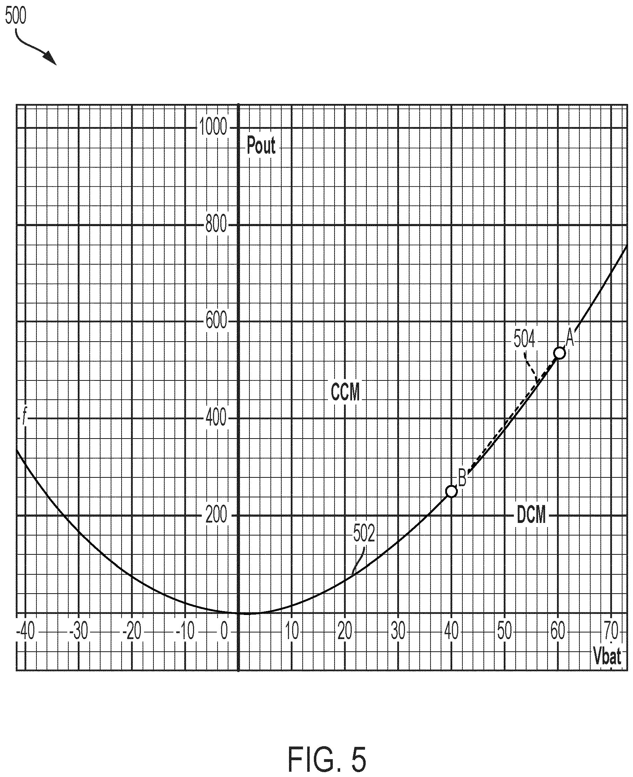

FIG. 5 illustrates a graph 500 of Equation (5) according to an example. The x-axis of the graph 500 indicates the battery voltage Vbat which, as discussed above, may be indicative of a voltage of the energy-storage device 126. The y-axis of the graph 500 indicates the output power Po provided to, or received from, the energy-storage device 126. A first trace 502 indicates Equation (5) as a function of Vbat and Po when known values are input into Equation (5) and Equation (5) is set equal to ½.

In normal operation, the energy-storage device 126 may have a voltage value that changes over time. For example, the voltage Vbat of the energy-storage device 126 may decrease while discharging, and may increase while charging. Accordingly, the voltage Vbat of the energy-storage device 126 may be within a range of a maximum voltage value and a minimum voltage value. The maximum voltage value may correspond to a state in which the energy-storage device 126 is fully charged. The minimum voltage value may correspond to a state in which the energy-storage device 126 has reached end-of-discharge (EOD). Additional factors may impact the voltage Vbat of the energy-storage device 126, but are not discussed for purposes of brevity.

In one example, the maximum voltage value may be approximately 60 V, and the minimum voltage value may be approximately 40 V. A second trace 504 indicates a linear approximation of the first trace 502 between 40 V and 60 V. The second trace 504 may be a straight line connecting a point on the first trace 502 corresponding to the minimum voltage value and a point on the first trace 502 corresponding to the maximum voltage value. Accordingly, the second trace 504 may represent a simplified approximation of a boundary between CCM and DCM (that is, a simplified approximation of the first trace 502 from 40 V to 60 V). For any given voltage Vbat along the second trace 504 (that is, between 40 V and 60 V), the second trace 504 indicates an approximate boundary between CCM and DCM. For example, at 50 V, the second trace 504 indicates that the boundary threshold power value is approximately 400 W. If the output power value is above the boundary threshold power value of 400 W, then the DC/DC converter 108 may be in CCM. If the output power value is below the boundary threshold power of 400 W, then the DC/DC converter 108 may be in DCM.

The boundary threshold power value may be defined such that, if the output power value is equal to the threshold, the DC/DC converter 108 is in CCM or DCM. In some examples, if the output power value is within a certain range of the boundary threshold power value (for example, within a certain amount of power or within a certain percentage of the boundary threshold power value), the DC/DC converter 108 may be assumed to be in CCM even if the output power value is slightly below the boundary threshold power value, or may be assumed to be in DCM even if the output power value is slightly above the boundary threshold power value.

Accordingly, the second trace 504 provides a computationally simple manner of determining, based on the voltage Vbat and the output power Po, whether the DC/DC converter 108 is in DCM or CCM. Determining the voltage Vbat and output power Po may be computationally less complex than, for example, measuring a current through the inductor 216 at a very high frequency. Examples of the disclosure therefore determine whether the DC/DC converter 108 is in DCM or CCM based on the voltage Vbat and the output power Po and control a high-frequency switch based on the determined mode of operation.

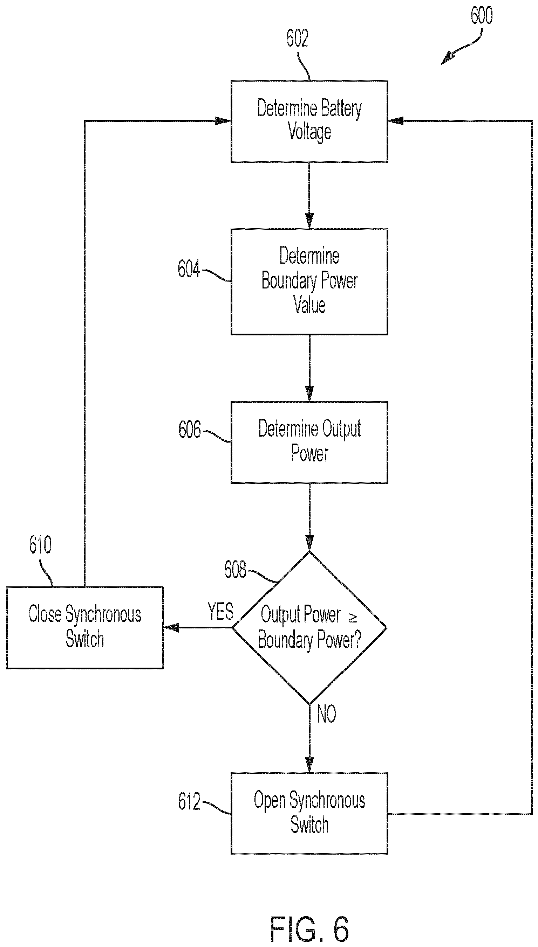

FIG. 6 illustrates a process 600 of operating the DC/DC converter 108 according to an example. The process 600 may be executed at least in part by the controller 112. The process 600 may be executed in the boost mode or the buck mode. As discussed above, in the buck mode, the first switching device 208 may be switched at a high frequency and referred to as a "high-frequency switch," and the second switching device 210 may be referred to as a "synchronous switch." In the boost mode, the second switching device 210 may be switched at a high frequency and referred to as a "high-frequency switch," and the first switching device 208 may be referred to as a "synchronous switch."

As discussed above, when the high-frequency switch is closed during either the boost mode or the buck mode, the synchronous switch may be open. However, when the high-frequency switch is open, the synchronous switch may be either open or closed depending on whether the DC/DC converter 108 is in DCM or CCM. Accordingly, the process 600 indicates a method of determining whether to open or close the synchronous switch while the high-frequency switch is open in either the boost mode or the buck mode.

At act 602, the controller 112 determines a voltage Vbat of the energy-storage device 126. The sensors 124 may include one or more voltage sensors to provide information indicative of the voltage Vbat to the controller 112. For example, the voltage sensors may be coupled to the battery connections 204, 206. Accordingly, at act 602, the controller 112 receives voltage information from the sensors 124 indicative of a voltage Vbat of the energy-storage device 126. In some examples, the controller 112 communicates with the energy-storage device 126 (for example, via the communication interface 120), and the energy-storage device 126 may directly communicate the voltage Vbat to the controller 112.

At act 604, the controller 112 determines a boundary power value. The boundary power value, or threshold power value, is determined pursuant to the second trace 504 using the battery voltage Vbat determined at act 602. As discussed above, the boundary power value represents a threshold above which the DC/DC converter 108 is in CCM, and below which the DC/DC converter 108 is in DCM.

At act 606, the controller 112 determines an output power Po of the energy-storage device 126. The controller 112 may communicate with the energy-storage device 126 (for example, via the communication interface 120), and the energy-storage device 126 may directly communicate information indicative of the output power Po to the controller 112. In some examples, the sensors 124 may include one or more current sensors configured to provide information indicative of a current provided to or received from the battery connections 204, 206 to the controller 112. The controller 112 may determine, based on the voltage Vbat and the current, the output power Po directly.

At act 608, the controller 112 determines whether the output power Po meets or exceeds the boundary power value. If the output power Po meets or exceeds the boundary power (608 YES), then the process 600 continues to act 610. Otherwise, if the output power Po is less than the boundary power (608 NO), then the process 600 continues to act 612.

At act 610, the controller 112 closes the synchronous switch. For example, in the buck mode, the controller 112 may close the second switching device 210. In the boost mode, the controller 112 may close the first switching device 208. Because the output power Po meets or exceeds the boundary power value, the DC/DC converter 108 may be in CCM. Accordingly, the controller 112 may maintain the synchronous switch in a closed position to improve efficiency. Because the inductor 216 does not fully discharge in CCM, a risk of power flowing in an undesired direction may be minimal or non-existent. The process 600 then returns to act 602.

At act 612, the controller 112 opens the synchronous switch. For example, in the buck mode, the controller 112 may open the second switching device 210. In the boost mode, the controller 112 may open the first switching device 208. Because the output power Po is less than the boundary power value, the DC/DC converter 108 may be in DCM. Accordingly, the synchronous switch may remain open to minimize a risk of power flowing in an undesired direction once the inductor 216 is fully discharged. As discussed above, although the synchronous switch is open, the inductor 216 may still discharge through a parallel-connected body diode of the synchronous switch, but power may be prevented from flowing in an undesired direction. The process 600 then returns to act 602.

Accordingly, the process 600 provides a manner of controlling a synchronous switch in a buck-boost converter. A risk of power flowing in an undesired direction may be minimized or eliminated without substantially reducing efficiency. Furthermore, cost and complexity may be reduced by obviating a need for a high-sampling-rate current detector.

Acts of the process 600 are illustrated as occurring sequentially for purposes of example only. In some examples, one or more acts of the process 600 may be executed in parallel. Furthermore, an order of the acts of the process 600 may be altered or modified. For example, although in some examples a boundary power value may be determined based on a voltage Vbat, in other examples a boundary voltage value may be determined based on an output power Po. For example, the controller 112 may determine that an output power Po is 400 W, and may determine that a corresponding boundary voltage value is approximately 50 V. The controller 112 may then determine whether the voltage Vbat is above 50 V and, if so, determine that the DC/DC converter 108 is in DCM and, if not, determine that the DC/DC converter 108 is in CCM.

Various controllers, such as the controller 112, may execute various operations discussed above. Using data stored in associated memory and/or storage (for example, the memory and/or storage 118), the controller 112 also executes one or more instructions stored on one or more non-transitory computer-readable media (which may, for example, be components of the memory and/or storage 118), which the controller 112 may include and/or be coupled to, that may result in manipulated data. In some examples, the controller 112 may include one or more processors or other types of controllers. In one example, the controller 112 is or includes at least one processor. In another example, the controller 112 performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Further examples are provided in the following clauses.

Clause 1. A power system configured to be coupled to at least one energy-storage device, the power system comprising:

> a first switch;

a second switch; and
at least one controller configured to

> detect a discontinuous conduction mode (DCM) based on at least one of an output voltage of the energy-storage device or an output power of the energy-storage device, and
> control the first switch to be open in one of a buck mode or a boost mode based on detecting the DCM.

Clause 2. The system of clause 1, wherein the at least one controller is further configured to determine, based on the output voltage, a boundary power value.

Clause 3. The system of clause 2, wherein the at least one controller is further configured to detect the DCM responsive to determining that the output power of the energy-storage device is less than the boundary power value.

Clause 4. The system of clause 2, wherein the at least one controller is further configured to detect a continuous conduction mode (CCM) responsive to determining that the output power of the energy-storage device is greater than the boundary power value.

Clause 5. The system of clause 4, wherein the at least one controller is further configured to control the first switch to be closed in one of the buck mode or the boost mode based on detecting the CCM.

Clause 6. The system of clause 1, wherein the at least one controller is further configured to detect a continuous conduction mode (CCM) based on at least one of the output voltage or the output power.

Clause 7. The system of clause 6, wherein the at least one controller is further configured to control the first switch to be closed in one of the buck mode or the boost mode based on detecting the CCM.

Clause 8. The system of clause 7, wherein the at least one controller is further configured to:

> control the first switch to be closed in the boost mode based on detecting the CCM; and
> control the second switch to be closed in the buck mode based on detecting the CCM.

Clause 9. The system of clause 1, wherein the at least one controller is further configured to:

> control the first switch to be open in the boost mode based on detecting the DCM; and
> control the second switch to be open in the buck mode based on detecting the DCM.

Clause 10. The system of clause 1, further comprising an inductor coupled to the first switch and the second switch.

Clause 11. The system of clause 10, wherein the inductor is configured to discharge stored energy through a body diode of the first switch while the first switch is open.

Clause 12. A method of operating a power system including a first switch and a second switch and being coupled to at least one energy-storage device, the method comprising:

detecting a discontinuous conduction mode (DCM) based on at least one of an output voltage of the energy-storage device or an output power of the energy-storage device, and

controlling the first switch to be open in one of a buck mode or a boost mode based on detecting the DCM.

Clause 13. The method of clause 12, further comprising determining, based on the output voltage, a boundary power value.

Clause 14. The method of clause 13, further comprising detecting the DCM responsive to determining that the output power of the energy-storage device is less than the boundary power value.

Clause 15. A non-transitory computer-readable medium storing thereon sequences of computer-executable instructions for operating a power system including a first switch and a second switch and being coupled to at least one energy-storage device, the sequences of computer-executable instructions including instructions that instruct at least one processor to operate according to the method of any of clause 12-14.

Having thus described several aspects of at least one embodiment, it is to be appreciated various alterations, modifications, and improvements will readily occur to those skilled in the art. Such alterations, modifications, and improvements are intended to be part of, and within the scope of, this disclosure. Accordingly, the foregoing description and drawings are by way of example only.

**Claims**

1. A power system configured to be coupled to at least one energy-storage device, the power system comprising:

a first switch;
a second switch; and
at least one controller configured to

detect a discontinuous conduction mode (DCM) based on at least one of an output voltage of the energy-storage device or an output power of the energy-storage device, and
control the first switch to be open in one of a buck mode or a boost mode based on detecting the DCM.

2. The system of claim 1, wherein the at least one controller is further configured to perform both of:

- determining, based on the output voltage, a boundary power value; and
- detecting the DCM responsive to determining that the output power of the energy-storage device is less than the boundary power value.

3. The system of claim 2, wherein the at least one controller is further configured to detect a continuous conduction mode (CCM) responsive to determining that the output power of the energy-storage device is greater than the boundary power value.

4. The system of claim 3, wherein the at least one controller is further configured to control the first switch to be closed in one of the buck mode or the boost mode based on detecting the CCM.

5. The system of any of the above claims, wherein the at least one controller is further configured to detect a continuous conduction mode (CCM) based on at least one of the output voltage or the output power.

6. The system of claim 5, wherein the at least one controller is further configured to control the first switch to be closed in one of the buck mode or the boost mode based on detecting the CCM.

7. The system of claim 6, wherein the at least one controller is further configured to:

control the first switch to be closed in the boost mode based on detecting the CCM; and
control the second switch to be closed in the buck mode based on detecting the CCM.

8. The system of any of the above claims, wherein the at least one controller is further configured to:

control the first switch to be open in the boost mode based on detecting the DCM; and
control the second switch to be open in the buck mode based on detecting the DCM.

9. The system of any of the above claims, further comprising an inductor coupled to the first switch and the second switch.

10. The system of claim 9, wherein the inductor is configured to discharge stored energy through a body diode of the first switch while the first switch is open.

11. A method of operating a power system including a first switch and a second switch and being coupled to at least one energy-storage device, the method comprising:

detecting a discontinuous conduction mode (DCM) based on at least one of an output voltage of the energy-storage device or an output power of the energy-storage device, and

controlling the first switch to be open in one of a buck mode or a boost mode based on detecting the DCM.

12. The method of claim 1, further comprising determining, based on the output voltage, a boundary power value.

13. The method of claim 12, further comprising detecting the DCM responsive to determining that the output power of the energy-storage device is less than the boundary power value.

14. A non-transitory computer-readable medium storing thereon sequences of computer-executable instructions for operating a power system including a first switch and a second switch and being coupled to at least one energy-storage device, the sequences of computer-executable instructions including instructions that instruct at least one processor to operate according to the method of any of claims 11-13.

15. A computer program comprising instructions to cause the power system of any of the claims 1 to 10 to carry out the method of any of claims 11 to 13.

FIG. 1

FIG. 2

FIG. 3A

FIG. 3B

FIG. 4A

FIG. 4B

FIG. 5

FIG. 6

Europäisches
Patentamt

European
Patent Office

Office européen
des brevets

# EUROPEAN SEARCH REPORT

Application Number

**EP 23 21 7247**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/043004 A1 (ABRAMOV IGOR [AU]) 13 February 2014 (2014-02-13) * paragraph [0008] * * paragraph [0020] - paragraph [0024] * * paragraph [0084] * * figure 3 * ----- | 1-15 | INV. H02M3/158 H02M5/458 ADD. H02M1/00 H02M3/156 |
| X | JP 7 061330 B1 (TOREX SEMICONDUCTOR LTD) 28 April 2022 (2022-04-28) * paragraph [0009] - paragraph [0010] * * figure 1 * * paragraph [0061] * ----- | 1-15 | |

**TECHNICAL FIELDS SEARCHED (IPC)**

H02M
H02J

The present search report has been drawn up for all claims

| Place of search | Date of completion of the search | Examiner |
|---|---|---|
| The Hague | 3 May 2024 | Magnanimo, Antonio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 7247

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2024

| Patent document cited in search report | | Publication date | Patent family member(s) | | Publication date |
|---|---|---|---|---|---|
| US 2014043004 | A1 | 13-02-2014 | AU 2012220342 | A1 | 02-05-2013 |
| | | | CA 2827982 | A1 | 30-08-2012 |
| | | | EP 2678929 | A1 | 01-01-2014 |
| | | | ES 2864763 | T3 | 14-10-2021 |
| | | | US 2014043004 | A1 | 13-02-2014 |
| | | | WO 2012113015 | A1 | 30-08-2012 |
| JP 7061330 | B1 | 28-04-2022 | JP 7061330 | B1 | 28-04-2022 |
| | | | JP 2023062635 | A | 08-05-2023 |
| | | | TW 202332177 | A | 01-08-2023 |
| | | | WO 2023068324 | A1 | 27-04-2023 |

EPO FORM P0459

For more details about this annex : see Official Journal of the European Patent Office, No. 12/82